# EUROPÄISCHE PATENTSCHRIFT

(11) **EP 2 598 446 B1**
(45) Veröffentlichungstag und Bekanntmachung des Hinweises auf die Patenterteilung: **04.12.2019**
(21) Anmeldenummer: 11741427.6
(22) Anmeldetag: 22.07.2011
(51) Int. Cl.: C02F 1/44, C02F 1/42, B01D 61/04, C02F 103/04

(54) **VERFAHREN UND ANLAGE ZUR AUFBEREITUNG VON WASSER**
PROCESS AND SYSTEM FOR TREATING WATER
PROCÉDÉ ET INSTALLATION DE TRAITEMENT DE L'EAU

(30) Priorität: 26.07.2010 DE 102010032722
(43) Veröffentlichungstag der Anmeldung: 05.06.2013
(73) Patentinhaber: BWT Aktiengesellschaft, 5310 Mondsee (AT)
(72) Erfinder: JOHANN, Jürgen, 69226 Nussloch (DE)
(74) Vertreter: Patentanwaltskanzlei Cartagena
(86) Internationale Anmeldenummer: PCT/EP2011/062628
(87) Internationale Veröffentlichungsnummer: WO 2012/013593

(56) Entgegenhaltungen:
- DE-A1- 3 543 661
- DE-A1- 4 222 586
- JP-A- 2000 061 462
- US-A1- 2002 125 191
- US-B1- 6 267 891

## Beschreibung

Die vorliegende Erfindung betrifft ein Verfahren zur Aufbereitung von Wasser, bei dem ein Wasserstrom in einer Umkehrosmoseeinrichtung aufgereinigt wird. Des Weiteren betrifft die vorliegende Erfindung eine Anlage zur Durchführung eines solchen Verfahrens.

Die Aufbereitung von Wasser ist in der heutigen Zeit von stetig steigender Bedeutung, insbesondere im Bereich der Trinkwassergewinnung sowie bei der Herstellung hochreiner Prozesswässer. Besonders hohe Anforderungen an die Wasserreinheit werden insbesondere im letzteren Fall gestellt, beispielsweise im Fall von Prozesswässern, die für pharmazeutische Verwendungen oder für Anwendungen in der Halbleiterproduktion vorgesehen sind.

Im Zuge der Aufbereitung von Wasser für derartige Anwendungen kommt insbesondere der an sich bekannte Prozess der Umkehrosmose zum Einsatz. Dabei wird das aufzubereitende Wasser unter Druck entlang einer für Wasser permeablen Membran geführt, wobei Wasser als Permeat durch die Membran hindurchtritt und die meisten im Wasser enthaltenen molekularen und ionischen Verunreinigungen durch die permselektive Membran zurückgehalten werden. Das aufzubereitende Wasser wird so in einen salzarmen Teilstrom (Permeat) und einen salzreichen Teilstrom (Konzentrat) aufgetrennt.

Bevor das aufzubereitende Wasser mittels eines solchen druckgetriebenen Verfahrens behandelt wird, wird in der Regel seine ionische Fracht mittels geeigneter lonentauscher reduziert. So ist z.B. aus der DE 3543661 A1 ein Verfahren zur Aufbereitung von Wasser bekannt, bei welchem das aufzubereitende Wasser zunächst eine Schicht eines Anionentauschers und anschließend eine unterhalb dieser angeordnete Schicht eines Kationentauschers passiert, bevor es der Umkehrosmose-Anlage zugeführt wird. Die lonentauscher sind hier seriell geschaltet.

Weitere Wasseraufbereitungsanlagen mit seriell geschalteten Reinigungsstufen sind aus der DE 4222586 A1, der US 6267891 B1 und der US 2002/125191 A1 bekannt.

Aus der JP 2000-061462 A ist es bekannt, verschiedene lonentauschersäulen parallel zu schalten und deren Abläufe zusammenzuführen, um den pH-Wert und die Härte eines Wasserstroms zu regeln.

Relativ schwierig ist allerdings die Abtrennung nicht ionischer oder schwer ionisierbarer Verbindungen wie zum Beispiel von Kohlendioxid (CO₂) oder von Siliziumdioxid (SiO₂). Derartige Spezies können aus pHneutralen Wasserströmen in der Regel mittels Umkehrosmose nicht oder nur unzureichend entfernt werden. Es ist deshalb üblich, dem aufzubereitenden Wasser vor dessen Einspeisung in eine Umkehrosmoseeinrichtung eine Lauge (zum Beispiel Natronlauge) zuzusetzen. Bei erhöhtem pH-Wert liegt in aller Regel ein sehr viel höherer Anteil der schwer entfernbaren Spezies in ionisierter Form vor. Dieser ionisiert vorliegende Anteil kann von Umkehrosmosemembranen in aller Regel besser abgetrennt werden. Als weiterer Vorteil resultiert aus der pH-Wert Anhebung vor der Umkehrosmose, inbesondere bei höheren pH-Werten > 10 im Zulauf, eine geringere Neigung zum Membranfouling, Als Membranfouling bezeichnet man die Immobilisierung von Bakterien auf der Membranoberfläche. Der entstehende Biofilm kann die Permeatleistung reduzieren. Weiterhin kann das Permeat bakteriell verunreinigt werden.

Aus der EP 0 946 268 ist ein Verfahren zum Betreiben hocheffizienter Umkehrosmose bekannt, bei dem ein Rohwasserstrom in einem oder mehreren Schritten vorbehandelt und anschließend in eine Umkehrosmoseeinrichtung eingespeist wird. Vor Einspeisung des vorbehandelten Rohwasserstroms wird allerdings dessen pH-Wert auf mindestens 8,5, in bevorzugten Ausführungsformen sogar auf 12 oder mehr, erhöht. Das Verfahren erlaubt die effiziente Abtrennung von schwach ionisierten Molekülspezies in der Umkehrosmoseeinrichtung. In Kombination mit den Vorbehandlungsschritten kann darüber hinaus sehr effizient einer Kesselsteinbildung vorgebeugt werden.

Die Erhöhung des pH-Wertes vor der Umkehrosmoseeinrichtung wird gemäß der EP 0 946 268 bevorzugt durch Zugabe von Alkali bewerkstelligt. Dies hat allerdings den Nachteil, dass ein ständiger Bedarf an hochreinem Alkali gedeckt werden muss. Es wäre zweifelsfrei vorteilhafter, eine Erhöhung des pH-Wertes vor der Umkehrosmose ohne Verwendung zusätzlicher Chemikalien bewirken zu können.

Der vorliegenden Erfindung lag die Aufgabe zugrunde, ein verbessertes Verfahren zur Aufbereitung von Wasser unter Verwendung einer Umkehrosmoseeinrichtung bereitzustellen. Bei dem Verfahren sollte die Zugabe von Chemikalien, insbesondere zur pH-Wert-Erhöhung, soweit wie möglich vermieden werden. Daneben sollte das Verfahren möglichst einfach gehalten sein, um die Fertigung konstruktiv möglichst einfach gehaltener und damit zuverlässiger Wasseraufbereitungsanlagen zu ermöglichen.

Diese Aufgabe wird gelöst durch das Verfahren mit den Merkmalen des Anspruchs 1 sowie die Anlage mit den Merkmalen des Anspruchs 9. Bevorzugte Ausführungsformen des erfindungsgemäßen Verfahrens sind in den abhängigen Ansprüchen 2 bis 8 angegeben. Der Wortlaut sämtlicher Ansprüche wird hiermit durch Bezugnahme zum Inhalt dieser Beschreibung gemacht.

Das erfindungsgemäße Verfahren dient zur Aufbereitung von salzhaltigem Wasser (Rohwasser) mittels einer Umkehrosmoseeinrichtung. Insbesondere kann durch ein erfindungsgemäßes Verfahren auch Reinstwasser hergestellt werden, wie es für die eingangs genannten pharmazeutischen Verwendungen oder für Anwendungen in der Halbleiterproduktion benötigt wird.

Bevor das Rohwasser in der Umkehrosmoseeinrichtung aufgereinigt wird, wird es vorbehandelt, und zwar in der Art, dass in einem Verfahrensschritt (dem vorzugsweise ersten Verfahrensschritt) ein Teil der im Wasserstrom enthaltenen Kationen gegen H⁺-Ionen ausgetauscht wird. Parallel dazu werden in einem zusätzlichen Enthärtungsschritt ein Teil der Kationen, insbesondere der Härtebildner im Rohwasser (wie Calcium- und Magnesium-Ionen), gegen "weiche" Ionen, insbesondere gegen Alkaliionen wie zum Beispiel Natrium- und/oder Kaliumionen ausgetauscht. In einem weiteren Schritt werden sämtliche im Wasserstrom enthaltene Anionen gegen Hydroxid-Ionen (OH⁻-Ionen) getauscht. Der aus der Vorbehandlung resultierende Wasserstrom enthält somit eine definierte Restkonzentration an Kationen wie Natrium oder Kalium, die nicht durch Protonen ersetzt wurden. Dies bedingt, dass der Wasserstrom nach dem Austausch der im Wasserstrom enthaltenen Anionen alkalisch ist, da aufgrund der enthaltenen Natrium- oder Kaliumionen im Wasserstrom die Hydroxid-Ionen aus dem Anionenaustausch nicht alle neutralisiert werden können, sondern im Wasser als Natron- oder Kalilauge verbleiben.

Zur Klarstellung: Als Kationen bezeichnet man grundsätzlich sämtliche positiv geladenen Ionen. Auch bei H⁺-Ionen in einem Wasserstrom handelt es sich somit um Kationen. Wenn jedoch vorliegend von einem Austausch "eines Teil der im Wasserstrom enthaltenen Kationen gegen H⁺-Ionen" gesprochen wird, so ist damit gemeint, dass die im aufzubereitenden Wasserstrom enthaltene Fracht an sonstigen positiv geladenen Ionen wie z.B. Na⁺-, K⁺-, Ca²⁺- oder Mg²⁺-Ionen teilweise gegen H⁺-Ionen ausgetauscht wird. Der Begriff "Kationen" meint in diesem Zusammenhang somit die im Wasserstrom enthaltenen positiven Ionen (zum weitaus überwiegenden Teil handelt es sich dabei in der Regel um metallische Kationen), ausgenommen H⁺-Ionen. Der aus der Vorbehandlung resultierende Wasserstrom enthält somit sowohl H⁺-Ionen als auch einen Rest an nicht ausgetauschten sonstigen positiven Ionen.

Durch die Vorbehandlung kann der pH-Wert des aufzubereitenden Wassers somit erhöht werden, ohne dem Wasserstrom Fremdchemikalien zusetzen zu müssen. Der aus der Vorbehandlung resultierende alkalische Wasserstrom kann unmittelbar, also ohne jegliche weitere zwischengeschaltete Aufreinigungs- und/oder Behandlungsschritte, in die Umkehrosmoseeinrichtung eingespeist werden, wo aufgrund der Alkalinität des Wasserstroms auch schwerer ionisierbare Spezies abgetrennt werden können.

Wie bereits erwähnt, erfolgt der Austausch der Härtebildner parallel zu dem teilweisen Austausch der im Wasserstrom enthaltenen Kationen gegen H⁺-Ionen. Zweckmäßigerweise wird der Rohwasserstrom hierfür in zwei Teilströme aufgeteilt, von denen einer einen Enthärter durchläuft und der andere mittels eines zu dem Enthärter parallel geschalteten Kationentauschers behandelt wird. Beide Ströme aus dem Enthärter und dem Kationenaustauscher werden danach wieder gemischt. Das Mischwasser der beiden Aufbereitungen enthält sowohl H⁺- als auch Natrium- und/oder Kaliumionen.

Die Vorbehandlung im Rahmen eines erfindungsgemäßen Verfahrens umfasst daher die folgenden Schritte:
- der Wasserstrom wird in mindestens zwei Teilströme aufgetrennt,
- mindestens einer der Teilströme wird mittels eines in der H⁺-Form betriebenen Kationentauschers behandelt,
- mindestens ein weiterer der Teilströme wird mittels eines zu dem Kationentauscher parallel geschalteten Enthärters behandelt,
- die mittels des Kationentauschers und des Enthärters behandelten Teilströme werden mittels mindestens eines in der OH⁻-Form betriebenen Anionentauschers behandelt.

Während der mindestens eine Teilstrom, der mittels eines in der H⁺-Form betriebenen Kationentauschers behandelt wird, im Wesentlichen vollständig von Kationen befreit wird (das heisst alle Kationen werden gegen H⁺-Ionen getauscht), weist der mindestens eine Teilstrom, der mittels des zu dem Kationentauscher parallel geschalteten Enthärters behandelt wird, noch Kationen auf. Lediglich härtebildende Kationen wie Calcium- und Magnesium-Ionen wurden gegen weiche Ionen wie Natrium- und Kalium-Ionen getauscht. Diese können anschließend nicht von OH⁻-Ionen aus dem Anionentauscher neutralisiert werden, so dass der aus der Vorbehandlung resultierende Wasserstrom alkalisch ist.

Bevorzugt werden die im Enthärter und im Kationentauscher behandelten Teilströme vereinigt, bevor sie mittels des mindestens einen Anionentauschers behandelt werden.

Die Parallelschaltung des Enthärters und des Kationentauschers bietet den Vorteil, dass der pH-Wert des Wasserstroms, den die Umkehrosmoseeinrichtung eingeleitet wird, besonders elegant gesteuert werden kann. Grundsätzlich ist es im Rahmen eines erfindungsgemäßen Verfahrens möglich, den pH-Wert des Wasserstroms zu steuern, indem der Anteil der Kationen variiert wird, die im Rahmen der Vorbehandlung gegen H⁺-Ionen ausgetauscht werden. Bei Parallelschaltung von Enthärter und Kationentauscher lässt sich der pH-Wert des Wasserstroms besonders einfach steuern, indem das Verhältnis variiert wird, in dem der Wasserstrom auf den Kationentauscher und den Enthärter aufgeteilt wird. Grundsätzlich gilt, je größer der Anteil des Wasserstroms ist, der über den Enthärter geleitet wird, desto alkalischer ist der resultierende Wasserstrom.

In herkömmlichen Anlagen zur Herstellung von Reinstwasser mittels Umkehrosmose ist nach der Umkehrosmose vorgeschalteten Kationen- und Anionenaustauscherstufen eine Laugedosierung angeordnet. Das Wasser ist dabei ungepuffert, d.h. kleinste Mengen an Lauge lassen den pH-Wert sprunghaft ansteigen, was sehr schwierig zu regeln ist und vor allem bei einer pH-Spitze über 13 in der Regel zur Zerstörung der Umkehrosmosemembran führt. Gemäß der vorliegenden Erfindung wird lediglich das Verhältnis zwischen Enthärter- und Kationenaustauscherstrom gemischt, die Regelung ist in einem weiten Bereich sehr stabil und somit der pH-Wert sehr genau einstellbar. Wird zum Beispiel bei einem Rohwasserstrom von 100 m³/h mit einer Härte von 20 °d, ein Teilstrom von 5 m³/h enthärtet und werden 95 m³/h parallel dazu in einem Kationenaustauscher die Kationen durch H⁺-Ionen ausgetauscht, so stellt sich nach der darauffolgenden Anionenaustauscherstufe ein pH-Wert von pH = 10.54 ein. Bei 10³/h Enthärterung und 90 m³/h Kationenaustausch ergibt sich ein pH-Wert von 10.84.

In bevorzugten Ausführungsformen des erfindungsgemäßen Verfahrens werden zwischen 75 und 99 Vol.-%, vorzugsweise zwischen 90 und 99 Vol.-%, des Wasserstromes mittels des Kationentauschers behandelt.

Es ist weiterhin bevorzugt, dass zwischen 1 und 25 Vol.-%, vorzugsweise zwischen 1 und 10 Vol.-%, des Wasserstromes mittels des Enthärters behandelt werden.

Besonders bevorzugt wird der pH-Wert des Wasserstroms, der in die Umkehrosmoseeinrichtung eingeleitet wird, auf einen Wert > 9, vorzugsweise > 10, besonders bevorzugt zwischen 10 und 11, eingestellt.

In bevorzugten Ausführungsformen kann auch der pH-Wert des in den Anionentauscher eintretenden Wasserstroms gezielt eingestellt werden. Dies kann mit besonderem Vorteil geschehen, indem aus dem Anionentauscher austretendes Wasser abgezweigt und dem Wasserstrom vor Eintritt in den Anionentauscher zugesetzt wird.

Bei den in einem erfindungsgemäßen Verfahren einsetzbaren Kationentauschern, Anionentauschern und Enthärtern handelt es sich sämtlich um im Handel erhältliche Standardkomponenten für Wasseraufbereitungsanlagen, die keiner näheren Erläuterung bedürfen.

Als Kationentauscher kommt besonders bevorzugt ein lonentauscher auf Basis eines stark sauren lonentauscherharzes zum Einsatz. Besonders bevorzugt sind Kationentauscher, die mit Härte verbundene Alkalinität (Bicarbonatalkalinität) passieren lassen.

Als Anionentauscher kommt bevorzugt ein lonentauscher auf Basis eines stark basischen lonentauscherharzes zum Einsatz. Besonders bevorzugt wird der Anionentauscher in der OH⁻-Form betrieben. Zusätzlich oder alternativ können auch Anionentauscher in der Carbonat-Form zum Einsatz kommen.

Der im Rahmen eines erfindungsgemäßen Verfahrens verwendete Enthärter ist bevorzugt ein in der Na⁺- oder K⁺-Form betriebener Enthärter.

Ebenfalls Gegenstand der vorliegenden Erfindung ist eine Anlage zur Aufbereitung von Wasser, in der sich insbesondere auch das erfindungsgemäße Verfahren durchführen lässt. Entsprechend eignet sich die erfindungsgemäße Anlage natürlich auch besonders gut zur Herstellung von Reinstwasser für die eingangs genannten Zwecke.

Eine erfindungsgemäße Anlage umfasst eine Umkehrosmoseeinrichtung sowie eine Zuleitung zu dieser Umkehrosmoseeinrichtung, die mindestens zwei zueinander parallele Teilabschnitte umfasst. Mindestens einer der Teilabschnitte weist einen in der H⁺-Form betriebenen Kationentauscher auf, mindestens ein weiterer umfasst einen Enthärter. Sämtliche zueinander parallele Teilabschnitte werden von einem Teil des aufzubereitenden Wassers durchströmt. Die Auftrennung des Wasserstroms in die Teilströme kann beispielsweise mittels eines Y-Stücks oder mittels einer bezüglich der entstehenden Volumenteilströme einstellbaren Weiche erfolgen.

Weiterhin umfasst die erfindungsgemäße Anlage einen in der OH⁻-Form betriebenen Anionentauscher, der den parallelen Teilabschnitten nachgeschaltet bzw. der Umkehrosmose vorgeschaltet ist. Mit anderen Worten, der Anionentauscher ist zwischen den parallelen Teilabschnitten und der Umkehrosmoseeinrichtung angeordnet und wird vom aufzubereitenden Wasser durchströmt, nachdem dieses die parallelen Teilabschnitte durchlaufen hat. Bevorzugt wird das Wasser aus den parallelen Teilabschnitten vereinigt, bevor es in den Anionentauscher eingespeist wird. Es ist grundsätzlich natürlich aber auch möglich, die beiden Teilströme in separaten Anionentauschern aufzuarbeiten und erst danach zu vereinigen.

Betreffend die Funktion der einzelnen Komponenten der erfindungsgemäßen Anlage wird auf die entsprechenden Ausführungen zu dieser Komponenten im Rahmen des erfindungsgemäßen Verfahrens verwiesen.

Weitere Merkmale der Erfindung ergeben sich aus der nachfolgenden Beschreibung bevorzugter Ausführungsformen in Verbindung mit den Zeichnungen und den Unteransprüchen. Hierbei können die einzelnen Merkmale der Erfindung alleine oder in Kombination miteinander verwirklicht sein. Die beschriebenen Ausführungsformen dienen zur Erläuterung und zum besseren Verständnis der Erfindung und sind in keinster Weise einschränkend zu verstehen.

### Figurenbeschreibung

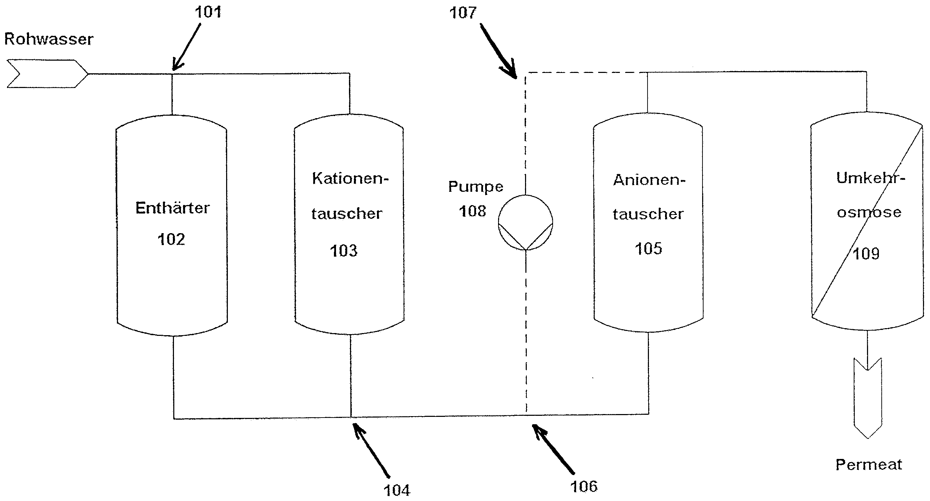

**Fig.1** zeigt eine schematische Prinzipskizze zur Erläuterung des erfindungsgemäßen Verfahrens.

Das Prinzip des erfindungsgemäßen Verfahrens lässt sich gut anhand von **Fig. 1** erklären. Links oben im Bild tritt ein Rohwasserstrom ein und wird am Punkt **101** in zwei Teilströme aufgeteilt. Einer der Teilströme (in der Regel ca. 5 % des Rohwasserstroms) durchläuft den Enthärter **102,** der bevorzugt in der Natrium- oder Kalium-Form betrieben wird und in dem härtebildende Kationen im Wesentlichen vollumfänglich entfernt werden. Das aus dem Enthärter **102** austretende Wasser weist entsprechend nur noch weiche Kationen wie Natrium- oder Kalium-Ionen auf und ist in aller Regel neutral (zumindest sofern der eintretende Rohwasserstrom einen neutralen pH-Wert aufweist). Der zweite Teilstrom tritt in den zum Enthärter **102** parallel geschalteten Kationentauscher **103** ein. Dieser wird bevorzugt in der H⁺-Form betrieben. In ihm werden im Wesentlichen sämtliche im Rohwasser enthaltene Kationen durch Protonen ersetzt. Das aus dem Kationentauscher **103** austretende Wasser ist entsprechend sauer. Am Punkt **104** werden die beiden Teilströme wieder vereinigt und in den Anionentauscher **105** eingeleitet. In diesem werden sämtliche im Wasser enthaltene Anionen gegen Hydroxid-Ionen (OH⁻-Ionen) getauscht. Da jedoch lediglich ein Teil der Hydroxid-Ionen durch die aus dem Kationentauscher **103** stammenden Protonen neutralisiert werden kann (Im Enthärter **102** wurden härtebildende Kationen nicht durch Protonen ersetzt sondern lediglich gegen weichere Kationen ausgetauscht), ist das aus dem Anionentauscher **105** austretende Wasser in aller Regel alkalisch. In bevorzugten Ausführungsformen kann der pH-Wert des Rohwassers modifiziert werden, unmittelbar bevor es in den Anionentauscher **105** eintritt. So kann zur Erhöhung des pH-Wertes dem in den Anionentauscher **105** einzuleitenden Wasser am Punkt **106** Lauge zugesetzt werden. Dies kann z.B. geschehen, indem über die Rückführungsleitung **107** aus dem Anionentauscher **105** austretendes Wasser mittels der Pumpe **108** dem in den Anionentauscher **105** eintretenden Wasserstrom zugeführt wird. Das aus dem Anionentauscher **105** austretende Wasser wird abschließend in die Umkehrosmoseeinrichtung **109** eingespeist, in der aufgrund des hohen pH-Werts des Wassers schwach ionisierbare Spezies effizient entfernt werden können.

## Patentansprüche

1. Verfahren zur Aufbereitung von Wasser, insbesondere zur Herstellung von Reinstwasser, bei dem ein Wasserstrom in einer Umkehrosmoseeinrichtung aufgereinigt wird, wobei der Wasserstrom einer Vorbehandlung mit den Schritten
- teilweiser Austausch der im Wasserstrom enthaltenen Kationen gegen H⁺-Ionen und
- im Wesentlichen vollständiger Austausch der im Wasserstrom enthaltenen Anionen gegen OH⁻-Ionen
unterzogen wird und der aus der Vorbehandlung erhaltene Wasserstrom unmittelbar in die Umkehrosmoseeinrichtung eingeleitet wird,
**dadurch gekennzeichnet, dass** zur Bewirkung des teilweisen Austauschs der im Wasserstrom enthaltenen Kationen und des vollständigen Austauschs der im Wasserstrom enthaltenen Anionen
- der Wasserstrom in mindestens zwei Teilströme aufgetrennt wird,
- mindestens einer der Teilströme mittels eines in der H⁺-Form betriebenen Kationentauschers behandelt wird,
- mindestens ein weiterer der Teilströme mittels eines zu dem Kationentauscher parallel geschalteten Enthärters behandelt wird, und
- die mittels des Kationentauschers und des Enthärters behandelten Teilströme mittels mindestens eines in der OH⁻-Form betriebenen Anionentauschers behandelt werden.

2. Verfahren nach Anspruch 1, **dadurch gekennzeichnet, dass** die behandelten Teilströme vereinigt werden, bevor sie mittels des mindestens einen Anionentauschers behandelt werden.

3. Verfahren nach einem der Ansprüche 1 oder 2, **dadurch gekennzeichnet, dass** zwischen 75 und 99 Vol.-%, vorzugsweise zwischen 90 und 99 Vol.-%, des Wasserstroms mittels des Kationentauschers behandelt werden.

4. Verfahren nach einem der vorhergehenden Ansprüche, **dadurch gekennzeichnet, dass** zwischen 1 und 25 Vol.-%, vorzugsweise zwischen 1 und 10 Vol.-%, des Wasserstroms mittels des Enthärters behandelt werden.

5. Verfahren nach einem der vorhergehenden Ansprüche, **dadurch gekennzeichnet, dass** der pH-Wert des Wasserstroms, der in die Umkehrosmoseeinrichtung eingeleitet wird, gesteuert wird, indem der Anteil der Kationen variiert wird, die im Rahmen der Vorbehandlung gegen H⁺-Ionen ausgetauscht werden.

6. Verfahren nach einem der vorhergehenden Ansprüche, **dadurch gekennzeichnet, dass** der pH-Wert des Wasserstroms, der in die Umkehrosmoseeinrichtung eingeleitet wird, gesteuert wird, indem das Verhältnis variiert wird, in dem der Wasserstrom auf den Kationentauscher und den Enthärter aufgeteilt wird.

7. Verfahren nach einem der vorhergehenden Ansprüche, **dadurch gekennzeichnet, dass** zur Einstellung des pH-Werts des in den Anionentauscher eintretenden Wasserstroms aus dem Anionentauscher austretendes Wasser abgezweigt und dem Wasserstrom vor Eintritt in den Anionentauscher zugesetzt wird.

8. Verfahren nach einem der vorhergehenden Ansprüche, **dadurch gekennzeichnet, dass** der Kationentauscher mit Härte verbundene Alkalinität (Bicarbonatalkalinität) passieren lässt.

9. Anlage zur Aufbereitung von Wasser, insbesondere zur Herstellung von Reinstwasser, gemäß einem Verfahren nach einem der Ansprüche 1 bis 10, umfassend eine Umkehrosmoseeinrichtung, eine Zuleitung zu dieser Umkehrosmoseeinrichtung, die mindestens zwei zueinander parallele Teilabschnitte umfasst, mindestens einer davon mit einem in der H⁺-Form betriebenen Kationentauscher, mindestens ein weiterer mit einem Enthärter, die jeweils von einem Teil des aufzubereitenden Wassers durchlaufen werden, sowie einen den parallelen Teilabschnitten nach- und der Umkehrosmoseeinrichtung vorgeschalteten, in der OH⁻-Form betriebenen Anionentauscher.

## Claims

1. Process for treating water, in particular for the preparation of ultrapure water, in which a water stream is purified in a reverse-osmosis unit, wherein the water stream is subjected to pretreatment comprising the steps
- partial exchange of the cations present in the water stream with H⁺ ions and
- essentially complete exchange of the anions present in the water stream with OH⁻ ions and the water stream resulting from the pretreatment is fed directly into the reverse-osmosis unit, **characterized in that**, to bring about the partial exchange of the cations present in the water stream and the complete exchange of the anions present in the water stream,
- the water stream is divided into at least two substreams,
- at least one of the substreams is treated by means of a cation exchanger operated in H⁺ mode,
- at least one more of the substreams is treated by means of a softener connected in parallel to the cation exchanger and
- the substreams treated by means of the cation exchanger and the softener are treated by means of at least one anion exchanger operated in OH⁻ mode.

2. Process according to Claim 1, **characterized in that** the treated substreams are combined before they are treated by means of the at least one anion exchanger.

3. Process according to either of Claims 1 and 2, **characterized in that** between 75 and 99% by volume, preferably between 90 and 99% by volume, of the water stream is treated by means of the cation exchanger.

4. Process according to any of the preceding claims, **characterized in that** between 1 and 25% by volume, preferably between 1 and 10% by volume, of the water stream is treated by means of the softener.

5. Process according to any of the preceding claims, **characterized in that** the pH of the water stream fed into the reverse-osmosis unit is controlled by varying the proportion of the cations that are exchanged for H⁺ ions during pretreatment.

6. Process according to any of the preceding claims, **characterized in that** the pH of the water stream fed into the reverse-osmosis unit is controlled by varying the split ratio in which the water stream is directed into the cation exchanger and into the softener.

7. Process according to any of the preceding claims, **characterized in that**, to adjust the pH of the water stream entering the anion exchanger, water exiting the anion exchanger is channelled off and added to the water stream before entry into the anion exchanger.

8. Process according to any of the preceding claims, **characterized in that** the cation exchanger allows alkalinity associated with hardness (bicarbonate alkalinity) to pass through.

9. Unit for the treatment of water, in particular for the preparation of ultrapure water by a process according to any of Claims 1 to 10, comprising a reverse-osmosis unit, a feed line to said reverse-osmosis unit that comprises at least two subsections parallel to one another, at least one of which having a cation exchanger operated in H⁺ mode and at least one more having a softener, through each of which is passed a portion of the water undergoing treatment, and also an anion exchanger operated in OH⁻ mode connected downstream of the parallel subsections and upstream of the reverse-osmosis unit.

## Revendications

1. Procédé de traitement d'eau, notamment pour la préparation d'eau ultrapure, selon lequel un courant d'eau est purifié dans un dispositif d'osmose inverse, le courant d'eau étant soumis à un prétraitement comprenant les étapes suivantes :
- le remplacement partiel des cations contenus dans le courant d'eau par des ions H⁺, et
- le remplacement essentiellement total des anions contenus dans le courant d'eau par des ions OH⁻,
et le courant d'eau obtenu à l'issu du prétraitement étant introduit directement dans le dispositif d'osmose inverse,
**caractérisé en ce que**, pour la réalisation du remplacement partiel des cations contenus dans le courant d'eau et du remplacement total des anions contenus dans le courant d'eau,
- le courant d'eau est divisé en au moins deux courants partiels,
- au moins un des courants partiels est traité au moyen d'un échangeur de cations exploité sous la forme H⁺,
- au moins un autre des courants partiels est traité au moyen d'un adoucisseur raccordé en parallèle de l'échangeur de cations, et
- les courants partiels traités au moyen de l'échangeur de cations et de l'adoucisseur sont traités au moyen d'au moins un échangeur d'anions exploité sous la forme OH⁻.

2. Procédé selon la revendication 1, **caractérisé en ce que** les courants partiels traités sont réunis avant d'être traités au moyen dudit au moins un échangeur d'anions.

3. Procédé selon l'une quelconque des revendications 1 et 2, **caractérisé en ce qu'**entre 75 et 99 % en volume, de préférence entre 90 et 99 % en volume, du courant d'eau est traité au moyen de l'échangeur de cations.

4. Procédé selon l'une quelconque des revendications précédentes, **caractérisé en ce qu'**entre 1 et 25 % en volume, de préférence entre 1 et 10 % en volume, du courant d'eau est traité au moyen de l'adoucisseur.

5. Procédé selon l'une quelconque des revendications précédentes, **caractérisé en ce que** le pH du courant d'eau qui est introduit dans le dispositif d'osmose inverse est ajusté par variation de la proportion de cations qui sont remplacés par des ions H⁺ dans le cadre du prétraitement.

6. Procédé selon l'une quelconque des revendications précédentes, **caractérisé en ce que** le pH du courant d'eau qui est introduit dans le dispositif d'osmose inverse est ajusté par variation du rapport selon lequel le courant d'eau est divisé entre l'échangeur de cations et l'adoucisseur.

7. Procédé selon l'une quelconque des revendications précédentes, **caractérisé en ce que**, pour l'ajustement du pH du courant d'eau entrant dans l'échangeur d'anions, l'eau sortant de l'échangeur d'anions est déviée et ajoutée au courant d'eau avant l'entrée dans l'échangeur d'anions.

8. Procédé selon l'une quelconque des revendications précédentes, **caractérisé en ce que** l'échangeur de cations laisse passer l'alcalinité reliée avec la dureté (alcalinité bicarbonate).

9. Unité pour le traitement d'eau, notamment pour la préparation d'eau ultrapure par un procédé selon l'une quelconque des revendications 1 à 10, comprenant un dispositif d'osmose inverse, une conduite d'alimentation pour ce dispositif d'osmose inverse, qui comprend au moins deux sections partielles parallèles les unes aux autres, au moins une d'entre elles avec un échangeur de cations exploité sous la forme H⁺, au moins une autre avec un adoucisseur, qui sont chacun traversés par une partie de l'eau à traiter, ainsi qu'un échangeur d'anions exploité sous la forme OH⁻, raccordé en aval des sections partielles parallèles et en amont du dispositif d'osmose inverse.
